# EUROPEAN PATENT APPLICATION

(11) **EP 3 421 338 A1**
(43) Date of publication of application: **02.01.2019**
(21) Application number: 17755977.0
(22) Date of filing: 10.01.2017
(51) Int. Cl.: B62H 5/06, B62J 99/00, B62K 21/00, E05B 83/00

(54) **HANDLEBAR LOCK DEVICE AND MOVING BODY**

(30) Priority: 25.02.2016 JP 2016034703
(71) Applicant: Omron Corporation, Kyoto-shi, Kyoto 600-8530 (JP)
(72) Inventor: MORI, Shunji, Kyoto-shi Kyoto 600-8530 (JP); ONITSUKA, Hiroyuki, Ichinomiya-shi Aichi 491-0201 (JP); TAKEYA, Hiroaki, Ichinomiya-shi Aichi 491-0201 (JP)
(74) Representative: Kilian Kilian & Partner
(86) International application number: PCT/JP2017/000482
(87) International publication number: WO 2017/145535

(57) **Abstract**

The present invention provides a handlebar locking device which (i) can be used for a moving body whose traveling direction is changed with a handlebar and (ii) makes it difficult to unlock the handlebar by a forcible method such as breaking. The handlebar locking device (20) includes (i) a lock unit (30) which is fixed in a steering column (11) that rotates along with a handlebar (5) and (ii) a fixed bracket (70) which is fixed in a head tube (12). The lock unit (30) includes (i) a lock pin (31) having a tip part (31a) that protrudes from a guiding long hole (11a) of the steering column (11) and (ii) a lock pin drive mechanism which controls the lock pin (31) to axially move back and forth. The fixed bracket (70) has an engagement groove (71) with which the lock pin (31) is to be engaged.

## Description

### Technical Field

The present invention relates to (i) a handlebar locking device which can be mounted in a moving body whose traveling direction is changed by a handlebar and (ii) a moving body.

### Background Art

There are cases where a handlebar of a bicycle or the like turns by itself while the bicycle or the like is parked. If an item is placed in a basket which is attached particularly above a front wheel, then the handlebar may easily turn due to the weight of the item. This may unfortunately cause the bicycle to fall. Therefore, there have conventionally been known handlebar locking devices that restrict rotation of handlebars.

For example, Patent Literature 1 discloses a handlebar locking device which locks a handlebar by (i) attaching a bifurcated stopper piece at an upper part of a front fork of a bicycle so that the stopper piece can swing vertically and (ii) sandwiching a main frame with the stopper piece.

Patent Literature 2 discloses a handlebar locking device which locks a handlebar by pressing and fitting a handlebar fixing member, which is slidably provided, into a receiving member which is attached, against a pressure of a first spring member, to a steering column pipe of a bicycle.

Meanwhile, motorcycles and the like are conventionally configured so that, for the purpose of preventing theft, a key cannot be removed while a handlebar of a motorcycle is turned.

### Citation List

### [Patent Literature]

[Patent Literature 1]
   Japanese Patent Application Publication, Tokukai, No. 2009-214807 (Publication Date: September 24, 2009)
[Patent Literature 2]
   Japanese Patent Application Publication, Tokukai, No. 2000-233783 (Publication Date: August 29, 2000).

### Summary of Invention

### Technical Problem

As in the cases of motorcycles and the like, a moving body which changes its traveling direction with a handlebar can be made difficult to steal by parking the moving body while the handlebar is locked in a turned position. Note, however, that this configuration is not limited to bicycles. Therefore, a handlebar locking device can not only prevent falling of a moving body but also serve as a lock for preventing theft.

However, according to the configuration of the handlebar locking device disclosed in each of Patent Literatures 1 and 2, the handlebar locking device itself is provided on a moving body such as a bicycle so as to be exposed. This unfortunately allows not only a user but also anybody to unlock the handlebar locking device by operating a stopper piece or handlebar fixing member. Therefore, conventional handlebar locking devices for preventing falling of a moving body cannot be used by themselves as locks for preventing theft.

It is alternatively possible that a separate lock for maintaining a lock state is provided on a handlebar locking device so that nobody except for a user possessing a key to the lock can release the lock. However, since the handlebar locking device is exposed, the lock can be relatively easily released in a case where a forcible method such as breaking the handlebar locking device is used.

The present invention has been made in view of the problem, and it is an object of the present invention to provide a handlebar locking device which (i) can be used for a moving body whose traveling direction is changed with a handlebar and (ii) makes it difficult to unlock the handlebar by a forcible method such as breaking.

### Solution to Problem

In order to attain the object, a handlebar locking device in accordance with an aspect of the present invention is a handlebar locking device to be mounted in a moving body whose traveling direction is changed by a handlebar, including: a fixed section which is fixed in a first cylinder that is a part of an exterior part of the moving body; a lock pin which is located in the first cylinder and which rotates along with the handlebar; and a lock pin drive mechanism which is located in the first cylinder and which controls the lock pin to move back and forth along an axis of the first cylinder, the fixed section having an engagement groove with which a tip part of the lock pin is to be engaged, and the lock pin drive mechanism being configured to (i) move, in a case where the handlebar is to be locked, the lock pin so that the tip part is engaged with the engagement groove and (ii) move, in a case where the handlebar is to be unlocked, the lock pin so that the tip part moves away from the engagement groove.

According to the configuration, the lock pin rotates along with the handlebar, and the fixed section is fixed in the first cylinder that is a part of the exterior part of the moving body. The fixed section has an end surface located at an axially end part of the fixed section, and an engagement groove to be engaged with the tip part of the lock pin is formed on the end surface. In a case where the lock pin drive mechanism controls the lock pin to move so that the tip part is engaged with the engagement groove of the fixed section, rotation of the handlebar is restricted. This locks the handlebar. In a case where the handlebar is to be unlocked, the lock pin drive mechanism controls the lock pin to move so that the tip part is removed from the engagement groove. This releases the restriction of the handlebar, and therefore allows the handlebar to be rotated.

According to the configuration, the lock pin, the lock pin drive mechanism, and the fixed section are contained in the exterior part of the moving body, and are therefore not viewable from outside of the moving body. This makes it difficult to unlock the handlebar by a forcible method such as breaking the handlebar locking device. In addition, in a case where, while the handlebar is locked, the handlebar is turned to such an extent that it is difficult for moving body to travel straight, the handlebar locking device can be used as a lock for preventing theft.

In such a case, the handlebar locking device can be configured so that: the tip part of the lock pin protrudes out from a hole of a second cylinder which rotates along with the handlebar; and the lock pin drive mechanism is located in the second cylinder.

### Advantageous Effects of Invention

An aspect of the present invention brings about an effect of, for example, being able to provide a handlebar locking device which (i) can be used for a moving body whose traveling direction is changed with a handlebar and (ii) makes it difficult to unlock the handlebar by a forcible method such as breaking.

### Brief Description of Drawings

Fig. 1 is a set of views (a) through (c) showing an overview of a bicycle which is a moving body on which a handlebar locking device in accordance with the present embodiment is mounted. (a) of Fig. 1 is a side view. (b) of Fig. 1 is a top view. (c) of Fig. 1 is an enlarged view illustrating a front part indicated by a circle in (a) of Fig. 1.
Fig. 2 is a set of views (a) and (b) illustrating an appearance of the handlebar locking device. (a) of Fig. 2 is a view in which the handlebar locking device is viewed from a direction in which axes of lock pins extend. (b) of Fig. 2 is a view in which the handlebar locking device is viewed from a direction perpendicular to the direction in which the axes of the lock pins extend.
Fig. 3 is an exploded perspective view illustrating front main parts of the bicycle to which the handlebar locking device is attached.
Fig. 4 is a set of (a) and (b) illustrating a steering column in which a lock unit of the handlebar locking device is fixed. (a) of Fig. 4 is a perspective view. (b) of Fig. 4 is an exploded perspective view.
Fig. 5 is a set of views (a) and (b) illustrating the lock unit. (a) of Fig. 5 is a perspective view. (b) of Fig. 5 is an exploded perspective view.
Fig. 6 is a set of views (a) and (b) illustrating the lock unit. (a) of Fig. 6 is a front view. (b) of Fig. 6 is a cross-sectional view taken along the line A-A in (a) of Fig. 6.
Fig. 7 is an exploded perspective view of a lock pin drive mechanism included in the lock unit.
Fig. 8 is an exploded perspective view of a control substrate section included in the lock unit.
Fig. 9 is an exploded perspective view illustrating (i) a fixed bracket of the handlebar locking device and (ii) a head tube in which the fixed bracket is fixed.
Fig. 10 is a set of partial front views (a) through (c) illustrating the front main parts of the handlebar locking device and showing engagement states of the lock pins and corresponding engagement grooves. (a) of Fig. 10 shows an unlock state. (b) of Fig. 10 shows a lock state. (c) of Fig. 10 shows an incomplete lock state.
Fig. 11 is a cross-sectional view of the handlebar locking device, which is equivalent to a cross-sectional view taken along the line A-A in Fig. 2. (a) of Fig. 11 shows an unlock state. (b) of Fig. 11 shows a lock state. (c) of Fig. 11 shows an incomplete lock state.
Fig. 12 is a functional diagram of the handlebar locking device.
Fig. 13 is a timing chart showing the following in a case where a transition from an unlock state to a lock state is being made in response to a lock instruction received: (i) a drive signal from a motor, (ii) output signals from upper and lower driving position sensors, (iii) a lock pin position sensor, and (iv) a displayed content of a user interface.
Fig. 14 is a timing chart showing the following in a case where a transition from an unlock state to an incomplete lock state to a lock state is being made in response to a lock instruction received: (i) a drive signal from the motor, (ii) output signals from the upper and lower driving position sensors, (iii) the lock pin position sensor, and (iv) a displayed content of the user interface.
Fig. 15 is a timing chart showing the following in a case where a transition from a lock state to an unlock state is being made in response to an unlock instruction received: (i) a drive signal from the motor, (ii) output signals from the upper and lower driving position sensors, (iii) the lock pin position sensor, and (iv) a displayed content of the user interface.
Fig. 16 is a timing chart showing the following in a case where the handlebar is turned by a strong force during a lock state so that a transition is made to an incomplete lock state and then back to a lock state: (i) a drive signal from the motor, (ii) output signals from the upper and lower driving position sensors, (iii) the lock pin position sensor, and (iv) a displayed content of the user interface.
Fig. 17 is a view illustrating display by which the user interface mounted on the bicycle notifies a user of an operation state of the handlebar locking device.

### Description of Embodiments

The following description will discuss a handlebar locking mechanism and a handlebar locking device in accordance with an embodiment of the present invention in detail with reference to the drawings.

### (Configuration of bicycle 1)

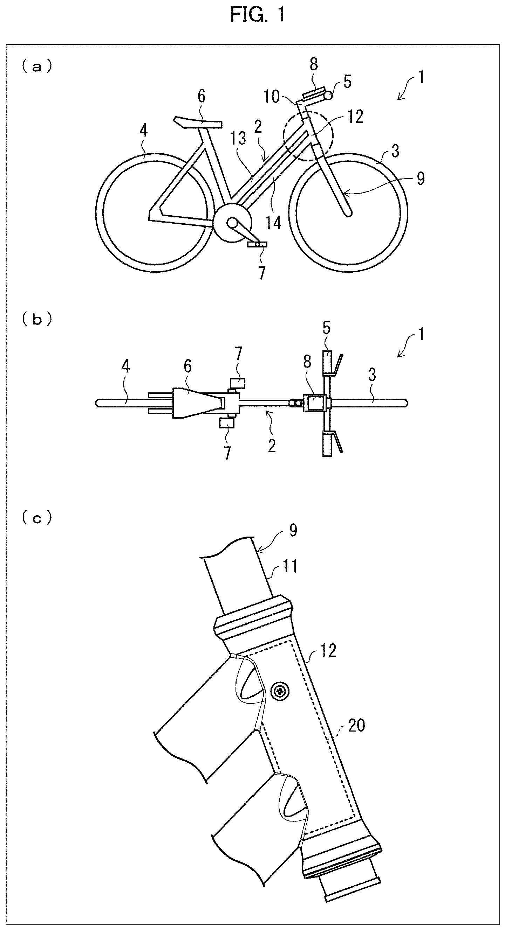

Fig. 1 is a set of views (a) through (c) showing an overview of a bicycle 1 which is a moving body on which a handlebar locking device 20 in accordance with the present embodiment is mounted. (a) of Fig. 1 is a side view, (b) of Fig. 1 is a top view, and (c) of Fig. 1 is an enlarged view illustrating a front part indicated by a circle in (a) of Fig. 1.

As illustrated in (a) through (c) of Fig. 1, the bicycle 1 is configured so that a front wheel 3, a rear wheel 4, a handlebar 5, a saddle 6, pedals 7, a front fork 9, a handling system 10, and the like are combined with a frame 2.

The handlebar locking device 20 is contained in the frame 2, so that the handlebar locking device 20 is not viewable from outside. At a center part of the handlebar 5, there is provided a user interface 8 which connects a user to the bicycle 1. The user interface 8 is herein a touch panel, for example. The user interface 8 can receive instructions and can display various pieces of information from the bicycle 1 of which the user is to be notified.

The frame 2 includes a plurality of members including, for example, a head tube, a top tube, a down tube, and a seat tube. The head tube 12 is located above the front wheel 3. To the head tube 12, a top tube 13 and a down tube 14 are connected.

Into the head tube 12, a steering column 11 is inserted. The steering column 11 serves as a shaft of the front fork 9. The front fork 9 allows steering while supporting an axis of the front wheel 3. Part of the front fork 9, which part is located below the steering column 11, is bifurcated into parts referred to as blades, which extend to the front wheel 3. To an upper end of the front fork 9 (upper end of the steering column 11), a handling system 10 is attached. The handling system 10 connects the front fork 9 to a center part of the handlebar 5. This allows the handlebar 5 and the front fork 9 to move together so that it is possible to transmit rotation of the handlebar 5 to the front wheel 3.

The handlebar locking device 20 is contained and provided in the head tube 12 so as to be not viewable from the outside of the bicycle 1. Although the details will be described later, the handlebar locking device 20 includes (i) a lock unit 30 having a shape of a shaft and (ii) a fixed bracket (fixed section) 70 having a cylindrical shape. The lock unit 30 is fixed in the steering column (second cylinder) 11, and moves along with the handlebar 5. The fixed bracket 70 is fixed in the head tube (first cylinder) 12, and the steering column 11 is inserted into the cylindrical shape of the fixed bracket 70. In a case where the lock unit 30 and the fixed bracket 70 are engaged with each other while the steering column 11 is sandwiched therebetween, rotation of the steering column 11 is restricted, so that the handlebar 5 is locked.

### (Schematic configuration of handlebar locking device 20)

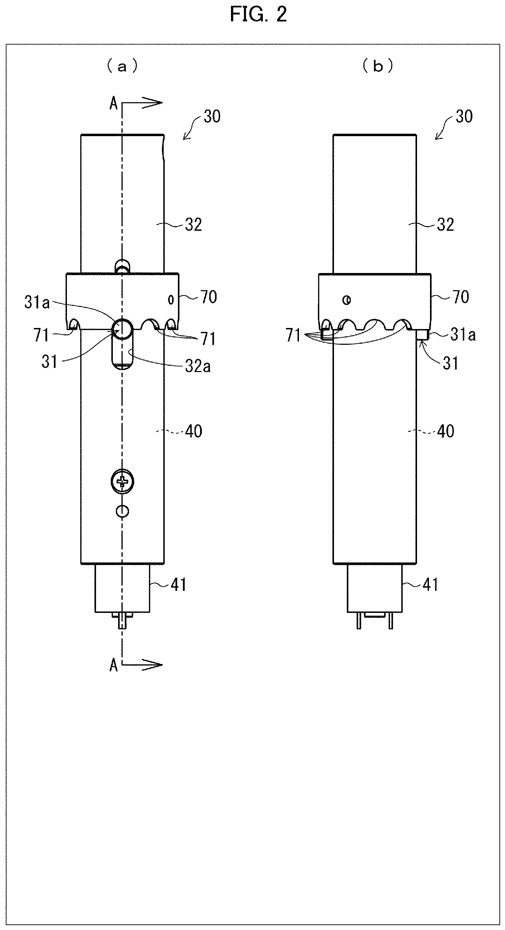

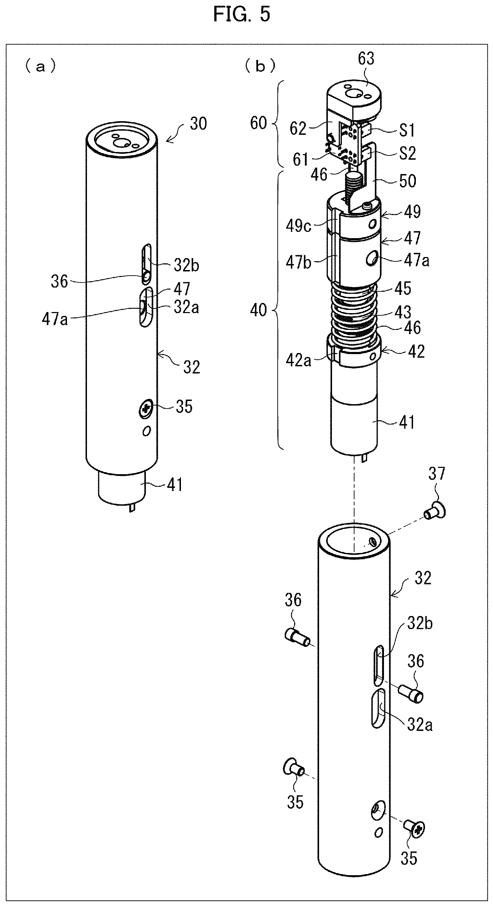

Fig. 2 is a set of views (a) and (b) illustrating an appearance of the handlebar locking device 20. (a) of Fig. 2 is a view in which the handlebar locking device 20 is viewed from a direction in which axes of lock pins 31 extend. (b) of Fig. 2 is a view in which the handlebar locking device 20 is viewed from a direction perpendicular to the direction in which the axes of the lock pins 31 extend. As illustrated in (a) and (b) of Fig. 2, the lock unit 30 includes a case 32 having a cylindrical shape. The case 32 has guiding long holes 32a which extend axially, and the lock pins 31 are inserted into the respective guiding long holes 32a. The lock pins 31 each have a circular axial cross-section. Respective tip parts 31a of the lock pins 31 protrude from an outer circumferential surface of the case 32. Such a pair of lock pins 31 are provided symmetrically with respect to a center axis of the lock unit 30. In the case 32, there are a lock pin drive mechanism 40 and a control substrate section 60 (described later) which control the lock pins 31 to axially move back and forth (see Fig. 5).

The fixed bracket 70 includes engagement grooves 71 with which the corresponding tip part 31a of the lock pins 31 are to be engaged. Specifically, the engagement grooves 71 are formed on an end surface 70a which (i) is an end surface located at an axially end part of the fixed bracket 70 and (ii) faces the lock pins 31 of the lock unit 30 which are inserted into the cylindrical shape of the fixed bracket 70. In a case where the tip parts 31a are engaged with the corresponding engagement grooves 71, the lock unit 30 is locked into the fixed bracket 70, so that rotation of the lock unit 30 is restricted. As in the case of the lock pins 31, the pair of engagement grooves 71 are provided symmetrically with respect to a center axis of the fixed bracket 70. Such engagement grooves 71 are preferably provided so as to face the corresponding tip parts 31a while the handlebar 5 is turning rightwards or leftwards by a certain angle from a direction facing the front, e.g., while the handlebar 5 is turning by 45°(±5°) or more. This makes it possible to lock the handlebar 5 in a turned position, and therefore makes it difficult to move the bicycle 1. Therefore, the handlebar locking device 20 can be used as a lock for preventing theft.

According to the present embodiment, such a plurality of engagement grooves 71 are provided so as to correspond to a respective plurality of angular positions at which the handlebar 5 is to be locked. In addition, the engagement grooves 71 each have a curved shape. Since the engagement grooves 71 each have such a shape, each of the lock pins 31 can be moved to the other engagement groove 71 in a case where a strong force to forcibly rotate the handlebar 5 in a lock state is applied (the details will be described later). This retains the lock state while also preventing the handlebar locking device 20 from breaking.

### (Detailed configuration of handlebar locking device 20)

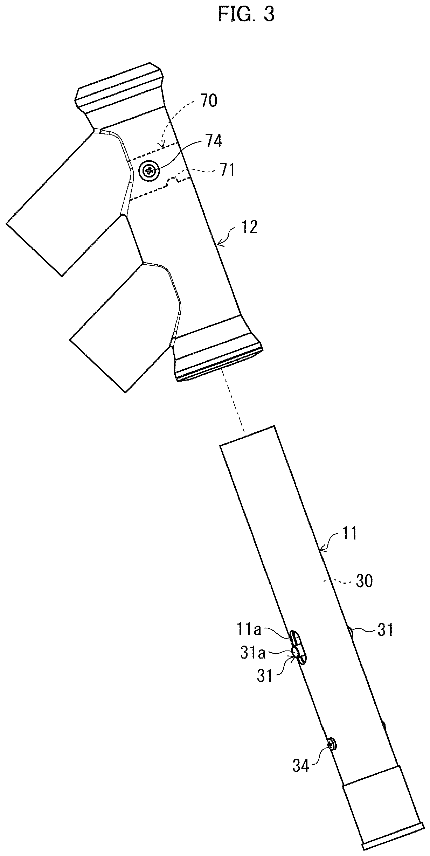

The configuration of the handlebar locking device 20 will be described in more detail below with reference to Figs. 3 through 9. Fig. 3 is an exploded perspective view illustrating front main parts of the bicycle 1 to which the handlebar locking device 20 is attached. As illustrated in Fig. 3, the fixed bracket 70 is inserted into the head tube 12, and is fixed with use of screws 74 or the like from the outside. Into the head tube 12 to which the fixed bracket 70 is attached, the steering column 11, which is the lock unit 30 is fixed, is inserted. The steering column 11a has guiding long holes 11a which correspond to the guiding long holes 32a of the case 32 of the lock unit 30. The tip parts 31a of the lock pins 31 pass through the corresponding guiding long holes 11a and then protrude from the outer circumferential surface of the steering column 11.

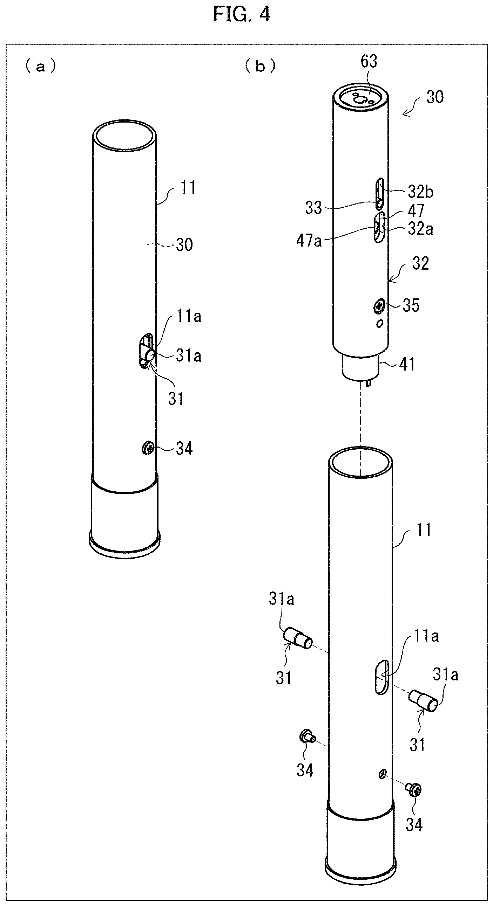

Fig. 4 is a set of (a) and (b) illustrating the steering column 11 in which the lock unit 30 of the handlebar locking device 20 is fixed. (a) of Fig. 4 is a perspective view. (b) of Fig. 4 is an exploded perspective view. As illustrated in (a) and (b) of Fig. 4, the lock unit 30 is inserted into the steering column 11 so that the guiding long holes 32a of the lock unit 30 and the corresponding guiding long holes 11a of the steering column 11 are aligned. Then, the lock unit 30 is fixed from the outside with use of screws 34 or the like. While the lock unit 30 is fixed in the steering column 11, the lock pins 31 are inserted into the corresponding guiding long holes 11a from the outside of the steering column 11. The lock pins 31 pass through the guiding long holes 11a and the guiding long holes 32a, and are then inserted into corresponding insertion holes 47a which are made in a lifting/lowering guide 47 of the lock pin drive mechanism 40 described later.

Fig. 5 is a set of views (a) and (b) illustrating the lock unit 30. (a) of Fig. 5 is a perspective view. (b) of Fig. 5 is an exploded perspective view. As illustrated in (a) and (b) of Fig. 5, the case 32 has guiding long holes 32b above the guiding long holes 32a into which the corresponding lock pins 31 are to be inserted. The guiding long holes 32b are formed so as to be narrower in width than the guiding long holes 32a into which the corresponding lock pins 31 are to be inserted.

The lock pin drive mechanism 40 includes a motor adapter 42, the lifting/lowering guide 47, and a nut (moving part) 49, which have guiding recesses 42a, 47b, and 49c, respectively, that are to be engaged with guiding protrusions (not illustrated) provided in the case 32, so that a positional relationship between the case 32 and the lock pin drive mechanism 40 are decided. The guiding recesses 47b and 49c of the lifting/lowering guide 47 and the nut 49, respectively, serve as guiding sections during lifting/lowering of the lock pins 31.

While the lock pin drive mechanism 40 is contained in the case 32, lifting/lowering pins 36 are inserted into the corresponding guiding long holes 32b from the outside of the case 32. The lifting/ lowering pins 36 pass through the corresponding guiding long holes 32b, and are then inserted into the corresponding insertion hole 49a of the nut 49 of the lock pin drive mechanism 40.

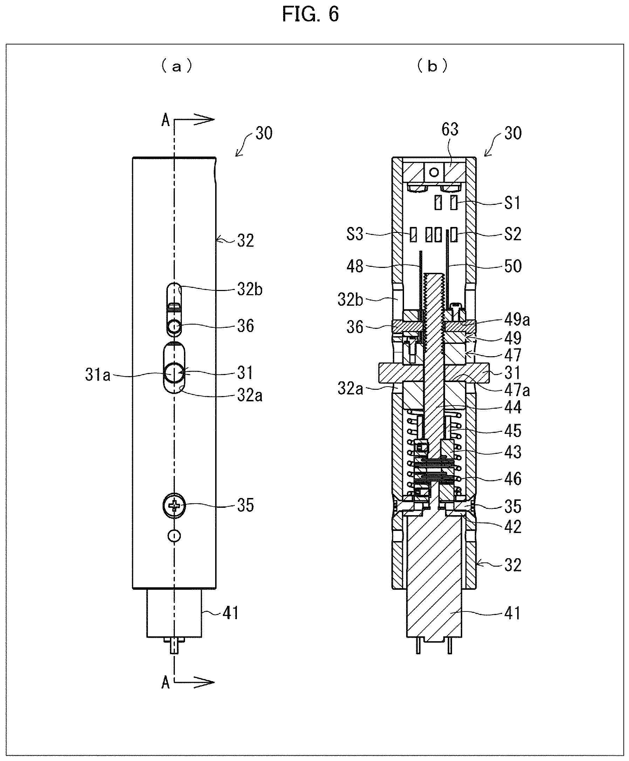

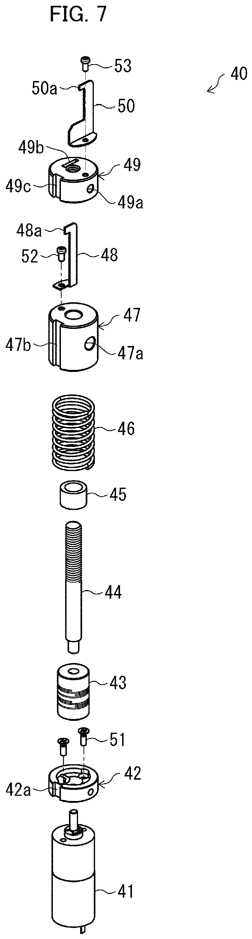

Fig. 6 is a set of views (a) and (b) illustrating the lock unit 30. (a) of Fig. 6 is a view in which the lock unit 30 is viewed from the direction in which the axes of the lock pins 31 extend. (b) of Fig. 6 is a cross-sectional view taken along the line A-A in (a) of Fig. 6. Fig. 7 is an exploded perspective view of the lock pin drive mechanism 40 included in the lock unit 30.

As illustrated in (a) and (b) of Fig. 6 and Fig. 7, the lock pin drive mechanism 40 includes, for example, the motor (drive section) 41, the motor adapter 42, a coupling 43, a screw shaft 44, a spacer 45, a compression spring (pressure-applying section) 46, the lifting/lowering guide 47, a lock pin-specific detection piece 48, the nut (moving part) 49, and a driving-specific detection piece 50.

The motor 41 is a motor which can be rotated reversely. To a drive shaft of the motor 41, a lower end part of the screw shaft 44 is connected with the coupling 43. This allows the screw shaft 44 to reversely rotate along with the driving of the motor 41. To the motor 41, an electric power is supplied from, for example, a battery which is not illustrated. The motor adapter 42 is provided between the motor 41 and the coupling 43. The motor adapter 42 is attached to the motor 41 with use of screws 51 or the like. The lock pin drive mechanism 40 is fixed to the case 32 (i) with the motor adapter 42 therebetween and (ii) with use of the screws 35 or the like.

The screw shaft 44 is enclosed, starting from the lower end part thereof, in the spacer 45 and the lifting/lowering guide 47 in this order. An upper end part of the screw shaft 44 is screwed into the nut 49. The lock pins 31 are inserted into the corresponding insertion holes 47a of the lifting/ lowering guide 47. The lock pin-specific detection piece 48 is fixed to a top surface of the lifting/lowering guide 47 with use of a screw 52 or the like. The lock pin-specific detection piece 48 is a detection piece for a lock pin position sensor S3 provided in the control substrate section 60 described later. The lock pin-specific detection piece 48 (i) passes through a rectangular hole 49b made in the nut 49 and then (ii) extends above the nut 49. The lock pin-specific detection piece 48 has a tip part having a hooked shape, and the tip part 48a shades the lock pin position sensor S3.

Meanwhile, the lifting/lowering pins 36 are inserted into the insertion holes 49a of the nut 49. To a top surface of the nut 49, the driving-specific detection piece 50 is fixed with use of screws 54 or the like. The driving-specific detection piece 50 is a detection piece for upper and lower driving position sensors S1 and S2 which are provided in the control substrate section 60 described later. The driving-specific detection piece 50 has a tip part having a hooked shape, and the tip part 50a shades the upper and lower driving position sensors S1 and S2.

The compression spring 46 is provided around outer circumferences of the coupling 43 and of the spacer 45. The compression spring 46 is provided so that (i) a lower end of the compression spring 46 is pressing against the motor adapter 42 and (ii) an upper end of the compression spring 46 is pressing against the lifting/lowering guide 47. The lifting/lowering guide 47 is constantly subjected to a pressure upwards by a pressure of the compression spring 46.

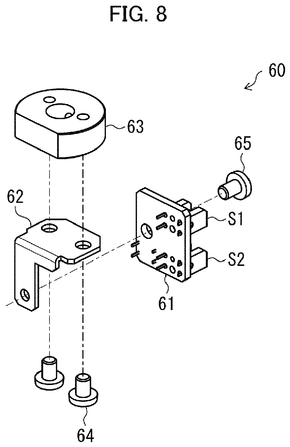

Fig. 8 is an exploded perspective view of the control substrate section 60 included in the lock unit 30. As illustrated in Figs. 6 and 8, the control substrate section 60 includes, for example, a substrate adapter 63, a substrate bracket 62, and a sensor substrate 61. The sensor substrate 61 is a control substrate on which a CPU, a RAM, a ROM, and the like are mounted. The upper and lower driving position sensors (moving part position identifying section) S1 and S2 and the lock pin position sensor (lock pin position identifying section) S3 are mounted on a side of the sensor substrate 61, which side is opposite a side to be attached to the substrate bracket 62. The upper and lower driving position sensors S1 and S2 are configured to identify a driving position which is a position of the nut 49. The lock pin position sensor S3 is configured to identify positions of the lock pins 31. These position sensor S1 through S3 are each a photosensor including a light-emitting element and a light-receiving element.

Such a sensor substrate 61 is attached to the substrate bracket 62 with use of a screw 65 or the like. To a top surface of the substrate bracket 62, the substrate adapter 63 is attached with use of screws 64 or the like. The control substrate section 60 is fixed to the case 32 (i) with the substrate adapter 63 therebetween and (ii) with use of a screw 37 or the like.

Such a control substrate section 60 communicates with a device outside of the handlebar locking device 20. In a case where the control substrate section 60 receives a signal instructing locking or unlocking of the handlebar 5, the control substrate section 60 controls the movement of the nut 49 of the lock pin drive mechanism 40. The control substrate section 60 is also configured so as to (i) identify positions of the nut 49 and of the lock pins 31, (ii) judge, based on information about the positions thus identified, an operation state of the handlebar locking device 20, and then (iii) output a result of the judgment from the handlebar locking device 20. The control substrate section 60 includes a lock status identifying section and a notification processing section.

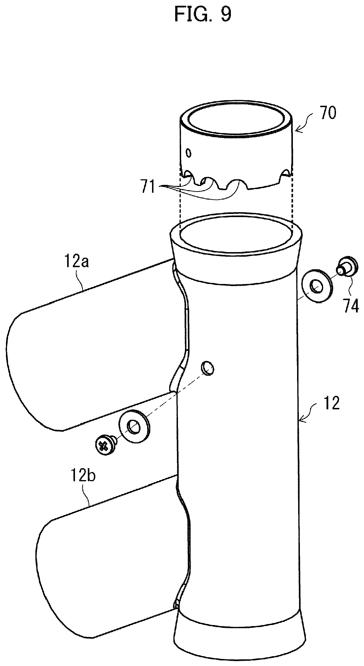

Fig. 9 is an exploded perspective view illustrating (i) the fixed bracket 70 of the handlebar locking device 20 and (ii) the head tube 12 in which the fixed bracket 70 is fixed. As illustrated in Fig. 9, the fixed bracket 70 has the end surface (lower end surface) 70a facing the lock pins 31 of the lock unit 30, and includes, on the end surface 70a, the engagement grooves 71 which are to be engaged with the tip parts 31a of the lock pins 31 while the fixed bracket 70 is attached to the head tube 12. The fixed bracket 70 is inserted into the head tube 12, and is fixed to the head tube 12 with use of the screws 74 or the like from outside. Note that Fig. 9 shows the head tube 12 which include joining parts 12a and 12b for joining the top tube and the down tube described above.

### (Description of operation of handlebar locking device 20)

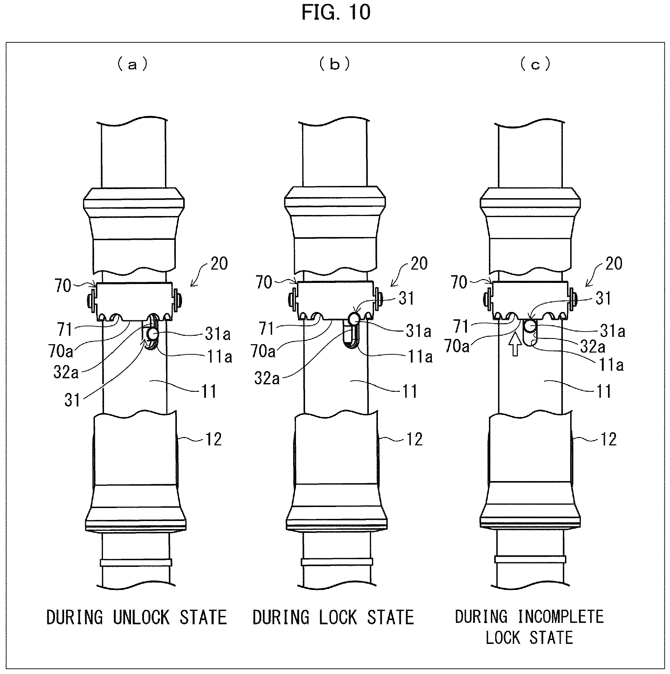

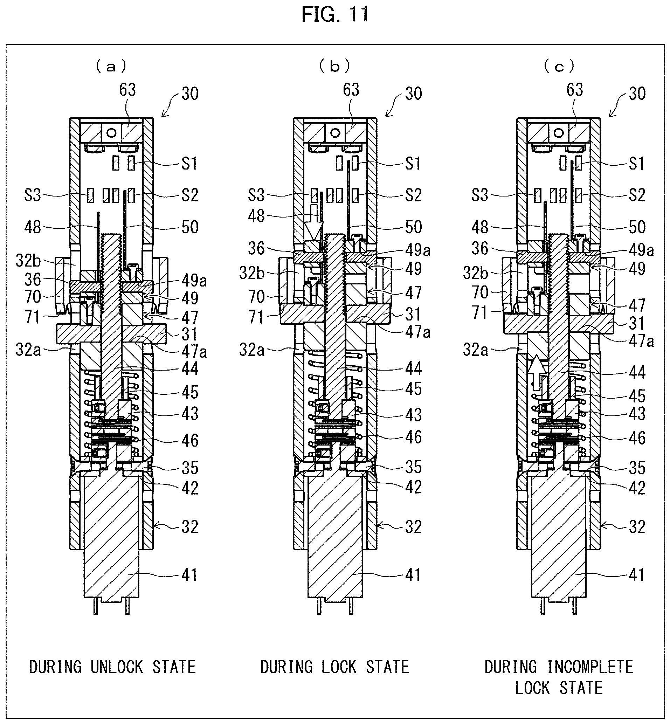

An operation of the handlebar locking device 20 will be described next with reference to Figs. 10 and 11. Fig. 10 is a set of partial front views (a) through (c) illustrating the front main parts of the handlebar locking device 20 and showing engagement states of the lock pins 31 and the corresponding engagement grooves 71. (a) of Fig. 10 shows an unlock state. (b) of Fig. 10 shows a lock state. (c) of Fig. 10 shows an incomplete lock state. Fig. 11 is a cross-sectional view of the handlebar locking device 20, which is equivalent to a cross-sectional view taken along the line A-A in Fig. 2. (a) of Fig. 11 shows an unlock state. (b) of Fig. 11 shows a lock state. (c) of Fig. 11 shows an incomplete lock state.

As illustrated in (a) of Fig. 10 and (a) of Fig. 11, each the lock pins 31 is located toward a lower part of corresponding one of the guiding long holes 11a of the steering column 11 during an unlock state. The nut 49 is located at a lowest home position (second position), so that the lifting/lowering guide 47, which is restricted from moving upwards by the nut 49, is located at a lowest home position. The compression spring 46 is compressed at a maximum level by being pushed by a bottom surface of the lifting/lowering guide 47. The tip part 50a of the driving-specific detection piece 50, which is fixed to the nut 49, is shading the lower driving position sensor S2. The tip part 48a of the lock pin-specific detection piece 48, which is fixed to the lifting/ lowering guide 47, is located below the lock pin position sensor S3 (the lock pin position sensor S3 is exposed).

The motor 41 is controlled to rotate forwards for a transition from the unlock state shown in (a) of Fig. 10 and (a) of Fig. 11 to the lock state of (b) of Fig. 10 and (b) of Fig. 11. This causes the screw shaft 44, which is connected to the drive shaft of the motor 41 through the coupling 43, to positively rotate. Into the nut 49 into which the screw shaft 44 is screwed, the lifting/lowering pins 36 are inserted through the guiding long holes 32b of the case 32. This causes the guiding long holes 32b to (i) prevent the nut 49 from rotating and (ii) guide the nut 49. Therefore, in a case where the screw shaft 44 positively rotates, the nut 49 moves upwards (moves to a first position). Along with the upward movement of the nut 49, the driving-specific detection piece 50 also moves, so that the tip part 50a passes the lower driving position sensor S2 and then shade the upper driving position sensor S1.

Such upward movement of the nut 49 causes the lifting/ lowering guide 47, which was pressed down by the nut 49, to be also moved upwards by a pressure of the compression spring 46. In a case where the lifting/lowering guide 47 moves upwards, the lock pins 31, which are inserted into the lifting/lowering guide 47, also move upwards inside the corresponding guiding long holes 11a of the steering column 11 (and inside the corresponding guiding long holes 32a of the case 32).

Note that in a case where the engagement grooves 71 of the fixed bracket 70 are facing the corresponding tip parts 31a of the lock pins 31, the tip parts 31a enter and are engaged with the corresponding engagement grooves 71 (see (b) of Fig. 10). This prevents the steering column 11 from rotating, and therefore locks the handlebar 5 (lock state).

Along with such an upward movement of the lifting/ lowering guide 47, the lock pin-specific detection piece 48 also moves upwards, so that the tip parts 48a shades the lock pin position sensor S3 (see (b) of Fig. 11). Specifically, during the lock state, (i) the driving-specific detection piece 50 shades the upper driving position sensor S1 and (ii) the lock pin-specific detection piece 48 shades the lock pin position sensor S3.

Meanwhile, in a case where the engagement grooves 71 are not facing the tip parts 31a, the tip parts 31a press against parts of the end surface 70a of the fixed bracket 70, which parts are located between the engagement grooves 71, so that the tip parts 31a are prevented from entering the engagement grooves 71. As a result, the handlebar 5 is put in a state in which the handlebar 5 is incompletely locked (incomplete lock state). Since the movement of the lock pins 31 is restricted at a midway point, the movement of the lifting/lowering guide 47 also stops at a midway point (see (c) of Fig. 11).

In a case where the upward movement of the lifting/lowering guide 47 is insufficient, the tip part 48a of the lock pin-specific detection piece 48 does not reach the lock pin position sensor S3, so that the lock pin position sensor S3 remains exposed (see (c) of Fig. 11). Specifically, during the incomplete lock state, lock pin position sensor S3 is exposed even if the upper driving position sensor S1 is shaded.

Note, however, that even in the incomplete lock state, it is possible to transition to a lock state by causing the handlebar 5 to turn rightwards or leftwards so as to cause the engagement grooves 71 to face the corresponding tip parts 31a. When the engagement grooves 71 face the corresponding tip parts 31a, the lifting/ lowering guide 47 is lifted by a pressure of the compression spring 46, so that the tip parts 31a enter the corresponding engagement grooves 71.

Meanwhile, the motor 41 is controlled to rotate backwards for a transition from the lock state shown in (b) of Fig. 10 and (b) of Fig. 11 to the unlock state shown in (a) of Fig. 10 and (a) of Fig. 11. This causes the screw shaft 44 to negatively rotate, and consequently causes the nut 49 to move downwards so as to return to a home position. In a case where the nut 49 moves downwards, the driving-specific detection piece 50 also moves downwards, so that the tip part 50a passes the upper driving position sensor S1 and then shade the lower driving position sensor S2.

The downward movement of the nut 49 causes the lifting/lowering guide 47 to be pressed down so as to return to a home position, so that the compression spring 46 is compressed. This, as illustrated in (a) of Fig. 10, causes the tip parts 31a to be removed from the engagement grooves 71 (unlock state). Along with such a movement of the lifting/ lowering guide 47, the tip part 48a of the lock pin-specific detection piece 48 is moved downwards to a position below the lock pin position sensor S3 (see (a) of Fig. 11).

In a case where a strong force to forcibly rotate the handlebar 5 is applied to handlebar 5 in the lock state shown in (b) of Fig. 10 and (b) of Fig. 11 also, a transition to the incompletely lock state shown in (c) of Fig. 10 and (c) of Fig. 11 occurs. This is because (i) a pressure of the compression spring 46 is used for the engagement of the tip parts 31a with the corresponding engagement grooves 71 and (ii) the engagement grooves 71 each have a curved shape.

According to such a configuration, in a case where the handlebar 5 in a lock state is turned by a strong force, each of the tip parts 31a of the lock pins 31 are pressured to move along the curved shape of a corresponding one of the engagement grooves 71. In so doing, the compression spring 46 becomes compressed. This allows the tip parts 31a to move. Then the tip parts 31a go over the corresponding engagement grooves 71 in which the tip parts 31a were located, so as to move to the parts of the end surface 70a, which parts are located between the engagement grooves 71. Although the handlebar 5 becomes temporarily unlocked, the handlebar 5 becomes locked again because each of the tip parts 31a immediately enters the other engagement groove 71 which is adjacent to the engagement groove 71 in which the tip part 31a was located. This retains the lock state while also preventing, by releasing the strong force applied to the handlebar 5, the handlebar locking device 20 from breaking.

Note that the movement of each of the tip parts 31a from one engagement groove 71 to the other is also subject to (i) the shape of each of the tip parts 31a and (ii) a depth by which each of the tip parts 31a is engaged with a corresponding one of the engagement grooves 71. Therefore, it is preferable that (i) each of the tip parts 31a has a circular axial cross-section and (ii) each of the tip parts 31a is, while being located in a corresponding engagement groove 71, engaged with the corresponding engagement groove 71 lightly enough that part of the tip part 31a is protruding out of the engagement groove 71.

Note that it is not possible to absorb a load which is applied by a strong force to turn the handlebar 5 in a lock state in a case where (i) only a single engagement groove 71 is provided (i.e. a single pair of an engagement groove 71 and a tip part 31a), (ii) each of the engagement grooves 71 does not have a curved shape, or (iii) each of the engagement grooves 71, which has a curved shape, has a depth which is great relative to a diameter of each of the lock pin 31. However, since the compression spring 46 is used, a load applied to the motor 41 can be absorbed with the compression of the compression spring 46 even in a case where the tip parts 31a of the lock pins 31 are not aligned with the corresponding engagement grooves 71. This allows the handlebar locking device 20 to be configured so as to hardly break.

### (Description of control section 100 of handlebar locking device 20)

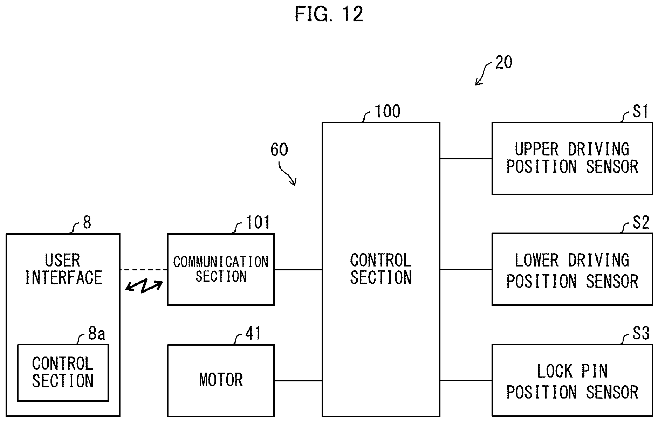

A control section 100 of the handlebar locking device 20 will be described next with reference to Figs. 12 through 16. Fig. 12 is a functional diagram of the handlebar locking device 20. As illustrated in Fig. 12, the handlebar locking device 20 includes the control section 100. The control section 100 includes the sensor substrate 61 mounted on the control substrate section 60, and is connected to, for example, the motor 41, a communication section 101, the upper and lower driving position sensors S1 and S2, and the lock pin position sensor S3.

The control section 100 controls forward and backward driving of the motor 41 and ON/OFF of the forward and backward driving. The control section 100 also judges an operation state of the handlebar locking device 20 according to signals which (i) are supplied from the upper and lower driving position sensors S1 and S2 and from the lock pin position sensor S3 and (ii) indicate shading and exposure of the sensors. Other than a lock state, an unlock state, an unlock state, and an incomplete lock state described earlier, the examples of the operation state encompass (i) a transitioning-to-lock state in which a transition from an unlock state to a lock state is being made and (ii) a transitioning-to-unlock state in which a transition from a lock state to an unlock state is being made.

The communication section (notification processing section) 101 allows the handlebar locking device 20 to communicate with an external end, and is mounted on the sensor substrate 61. According to the present embodiment, the communication section 101 carries out wireless communication or wired communication with the user interface 8 mounted on the bicycle 1. The communication section 101 transmits, to the control section 100, a lock instruction or an unlock instruction supplied from the user interface 8. The communication section 101 also transmits, to the user interface 8, information indicative of an operation state of the handlebar locking device 20, which operation state has been judged by the control section 100. According to the information which has been received from the control section 100 and which indicates the operation state of the handlebar locking device 20, the user interface 8 notifies a user of the operation state of the handlebar locking device 20 through displaying the operation state. On the user interface 8, a control section 8a is mounted.

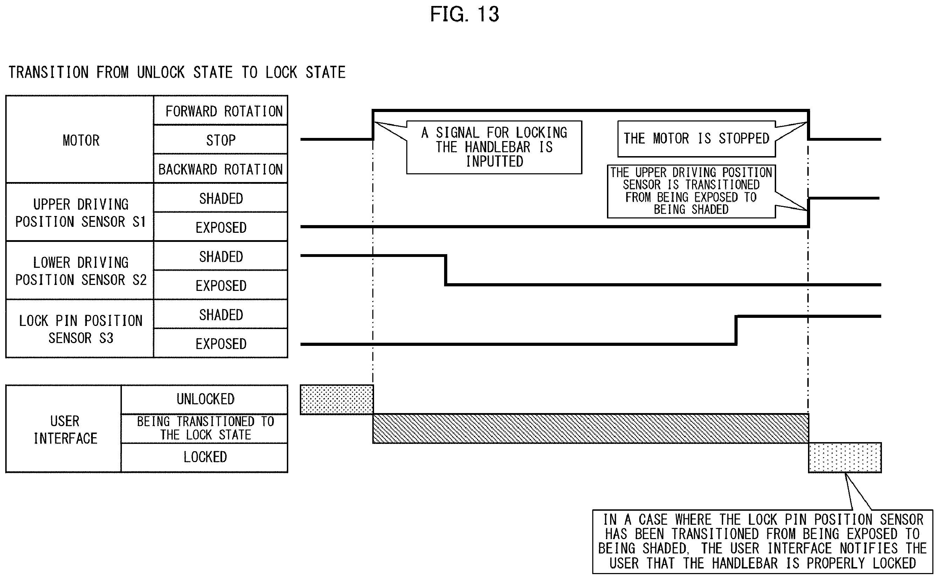

Fig. 13 is a timing chart showing the following in a case where a transition from an unlock state (state shown in (a) of Fig. 10 and (a) of Fig. 11) to a lock state (state shown in (b) of Fig. 10 and (b) of Fig. 11) is being made in response to a lock instruction received: (i) a drive signal from the motor 41, (ii) output signals from the upper and lower driving position sensors S1 and S2, (iii) the lock pin position sensor S3, and (iv) a displayed content of the user interface 8.

As illustrated in Fig. 13, the control section 100 judges that a state is an unlock state in a case where (i) the motor 41 has stopped, (ii) the output signal from the lower driving position sensor S2 indicates "shaded", and (iii) the output signal from the lock pin position sensor S3 indicates "exposed". Then, the user interface 8 displays "the handlebar is unlocked".

In this state, in a case where a signal for locking the handlebar 5 is inputted, such as an input of a lock instruction, the control section 100 turns on the motor 41 so as to drive the motor 41 to rotate forwards. This causes the nut 49 to start moving upwards as described above, so that the lower driving position sensor S2 is transitioned from being shaded to being exposed, and then the upper driving position sensor S1 is transitioned from being exposed to being shaded. The control section 100 turns off the motor 41 with a timing with which the upper driving position sensor S1 is transitioned from being exposed to being shaded.

In a case where the lifting/lowering guide 47 is lifted along with the movement of the nut 49 and consequently the handlebar 5 faces a proper direction to be locked, the tip parts 31a of the lock pins 31 enter the corresponding engagement grooves 71, so that the lock pin position sensor S3 is transitioned from being exposed to being shaded. The control section 100 judges that a state is a lock state in a case where the lock pin position sensor S3 has already been transitioned from being exposed to being shaded when the upper driving position sensor S1 is transitioned from being exposed to being shaded. Then, the user interface 8 displays "lock" indicating that the handlebar 5 is properly locked.

During a period between (i) a time point at which the motor 41 is turned on to drive to rotate forwards and (ii) a time point at which the state is judged as a lock state, the control section 100 judges that the state is at a midway point of being transitioned to the lock state. Then, the user interface 8 displays "being transitioned to the lock state" indicating that the state is at a midway point of being transitioned to the lock state.

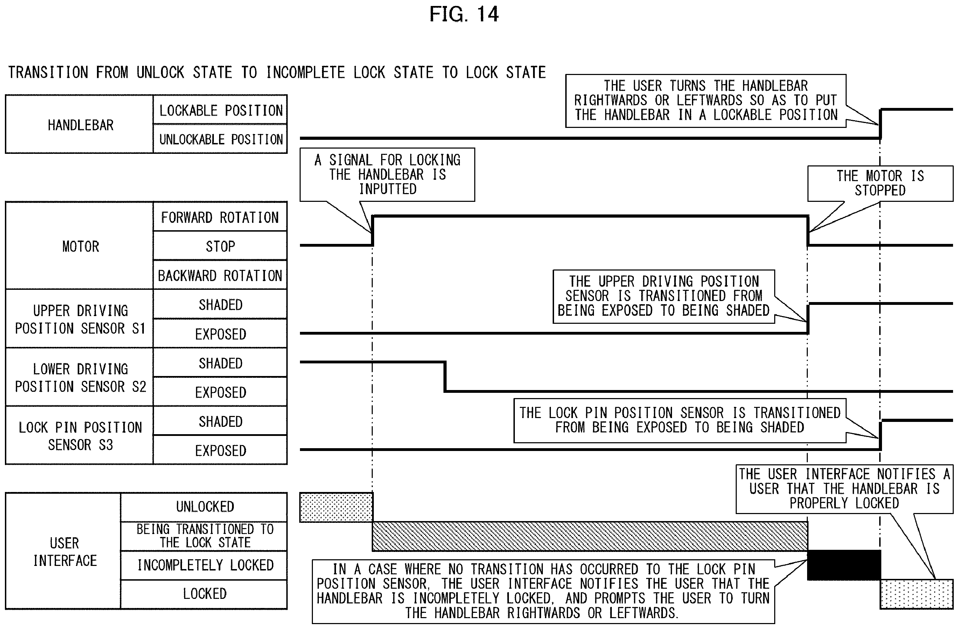

Fig. 14 is a timing chart showing the following in a case where a transition from an unlock state (state shown in (a) of Fig. 10 and (a) of Fig. 11) to an incomplete lock state (state shown in (c) of Fig. 10 and (c) of Fig. 11) to a lock state (state shown in (b) of Fig. 10 and (b) of Fig. 11) is being made in response to a lock instruction received: (i) a drive signal from the motor 41, (ii) output signals from the upper and lower driving position sensors S1 and S2, (iii) an output signal from the lock pin position sensor S3, and (iv) a displayed content of the user interface 8.

As indicated by a comparison with Fig. 13, the lock pin position sensor S3 remains exposed because the tip parts 31a press against parts of the end surface 70a of the fixed bracket 70, which parts are located between the engagement grooves 71, so that the tip parts 31a are prevented from entering the engagement grooves 71. In a case where the lock pin position sensor S3 remains exposed even though the upper driving position sensor S1 is transitioned from being exposed to being shaded, the control section 100 judges that a state is an incomplete lock state. Then, the user interface 8 displays "incomplete lock" indicating that locking of the handlebar 5 is incomplete. In this case, the user interface 8 also displays, for example, a warning message such as "please turn the handlebar", in addition to "incomplete lock".

Then, in a case where a user turns the handlebar 5 so as to cause the tip parts 31a to enter the corresponding engagement grooves 71 and consequently the lock pin position sensor S3 is transitioned from being exposed to being shaded, the control section 100 judges that a state is a lock state. Then, the display of the user interface 8 is switched from "incomplete lock" to "lock" indicating that the handlebar 5 is properly locked.

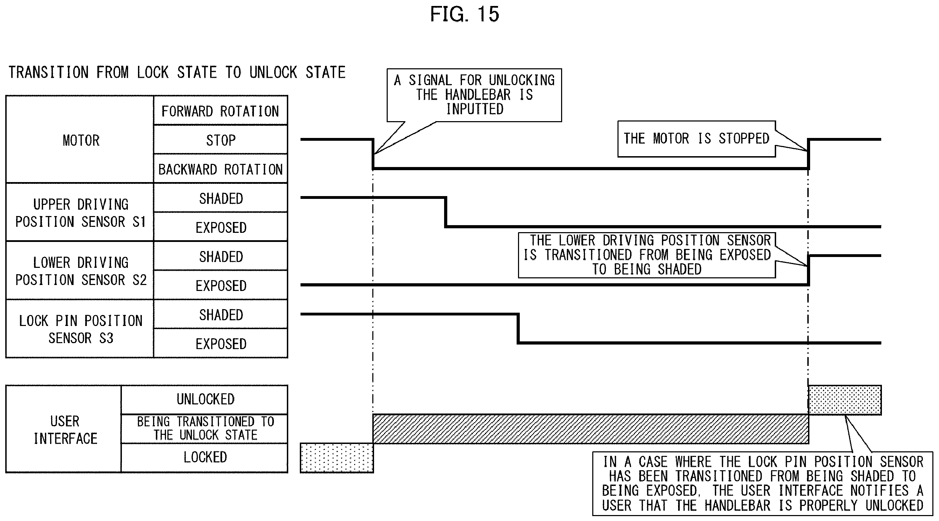

Fig. 15 is a timing chart showing the following in a case where a transition from a lock state (state shown in (b) of Fig. 10 and (b) of Fig. 11) to an unlock state (state shown in (a) of Fig. 10 and (a) of Fig. 11) is being made in response to an unlock instruction received: (i) a drive signal from the motor 41, (ii) output signals from the upper and lower driving position sensors S1 and S2, (iii) an output signal from the lock pin position sensor S3, and (iv) a displayed content of the user interface 8.

As illustrated in Fig. 15, the control section 100 judges that a state is a lock state in a case where (i) the motor 41 has stopped, (ii) the output signal from the upper driving position sensor S1 indicates "shaded", and (iii) the output signal from the lock pin position sensor S3 also indicates "shaded". Then, the user interface 8 displays "lock".

In this state, in a case where a signal for unlocking the handlebar 5 is inputted, such as an input of an unlock instruction, the control section 100 turns on the motor 41 so as to drive the motor 41 to rotate backwards. This causes the nut 49 to start moving in a downward direction back to the home position as described above, so that the upper driving position sensor S1 is transitioned from being shaded to being exposed, and then the lower driving position sensor S2 is transitioned from being exposed to being shaded. The control section 100 turns off the motor 41 with a timing with which the lower driving position sensor S2 is transitioned from being exposed to being shaded.

In a case where the lifting/lowering guide 47 is pressed down along with the movement of the nut 49 back to the home position and consequently the lock pins 31 return to a home position, the tip parts 31a are removed from the engagement grooves 71 so as to move downwards. This causes the lock pin position sensor S3 to be transitioned from being shaded to being exposed. The control section 100 judges that a state is an unlock state in a case where the lock pin position sensor S3 has already been transitioned from being shaded to being exposed when the lower driving position sensor S2 is transitioned from being exposed to being shaded. Then the user interface 8 displays "unlock" informing the user that the handlebar 5 is properly unlocked.

During a period between (i) a time point at which the motor 41 is turned on to drive to rotate backwards and (ii) a time point at which the state is judged as an unlock state, the control section 100 judges that the state is at a midway point of being transitioned to the unlock state. Then, the user interface 8 displays "being transitioned to the unlock state" indicating that the state is at a midway point of being transitioned to the unlock state.

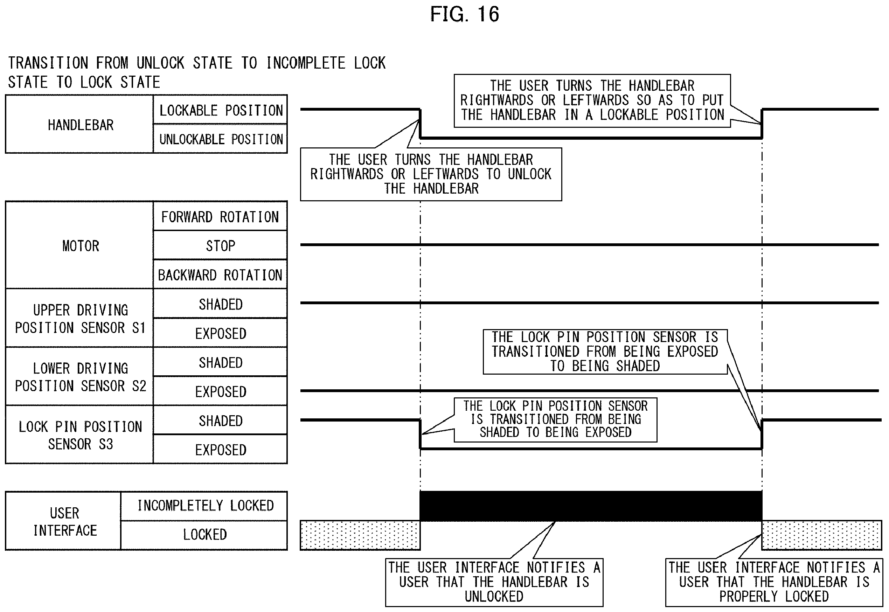

Fig. 16 is a timing chart showing the following in a case where the handlebar 5 is turned by a strong force during a lock state (state shown in (b) of Fig. 10 and (b) of Fig. 11) so that a transition is made to an incomplete lock state (state shown in (c) of Fig. 10 and (c) of Fig. 11) and then back to a lock state: (i) a drive signal from the motor 41, (ii) output signals from the upper and lower driving position sensors S1 and S2, (iii) an output signal from the lock pin position sensor S3, and (iv) a displayed content of the user interface 8.

As illustrated in Fig. 16, the state is a lock state, so that (i) the motor 41 is stopping and (ii) the upper driving position sensor S1 and the lock pin position sensor S3 are each shaded. In a case where the handlebar 5 is turned by a strong force and consequently the tip parts 31a move up onto the parts of the end surface 70a which parts are located between the engagement grooves 71, a state becomes an incompletely locked (state shown in (c) of Fig. 10 and (c) of Fig. 11). This causes the lock pin position sensor S3 to be transitioned from being shaded to being exposed. The control section 100 judges that a transition has been made from the lock state to the incomplete lock state. Then the user interface 8 displays, for example, "the handlebar is unlocked" informing the user that the handlebar 5 has been unlocked. In this case, the user interface 8 also displays a warning message such as "please turn the handlebar".

Then, in a case where a user turns the handlebar 5 so as to cause the tip parts 31a to enter the corresponding engagement grooves 71 and consequently the lock pin position sensor S3 is transitioned from being exposed to being shaded, the control section 100 judges that a state is back to a lock state. Then, the display of the user interface 8 is switched from "the handlebar is unlocked" to, for example, "the handlebar is locked" indicating that the handlebar 5 is back to a properly locked state.

In a case where a transition is made to an incomplete lock state because the handlebar 5 is turned by a strong force as described earlier, each of the tip parts 31a tends to be immediately engaged with the adjacent engagement groove 71 due to momentum obtained by the turning. Therefore, ordinarily, a warning such as "the handlebar is unlocked" is displayed for an extremely short period of time.

The control section 100 judges that the state is "error state" as the operation states of the handlebar locking device 20 in a case where, although the control section 100 receives a lock instruction or an unlock instruction via the communication section 101 so as to supply a drive signal to the motor 41, (i) there are no changes in output signals from the upper and lower driving position sensors S1 and S2 and/or (ii) an overcurrent of the motor 41 is detected. In a case where an error is detected, the user interface 8 displays a message such as (i) "error" indicating that the error has occurred or (ii) "please carry out maintenance of the handlebar locking device".

In addition, in a case where an error content can be specified, such as the handlebar locking device 20 malfunctioning or the battery running out, the control section 100 transmits the specified error content to the user interface 8. In response, the user interface 8 displays, in addition to "error", a message such as "malfunction of handlebar locking device" or "battery is out" which notifies a user of the error content.

### (Examples of display of user interface 8)

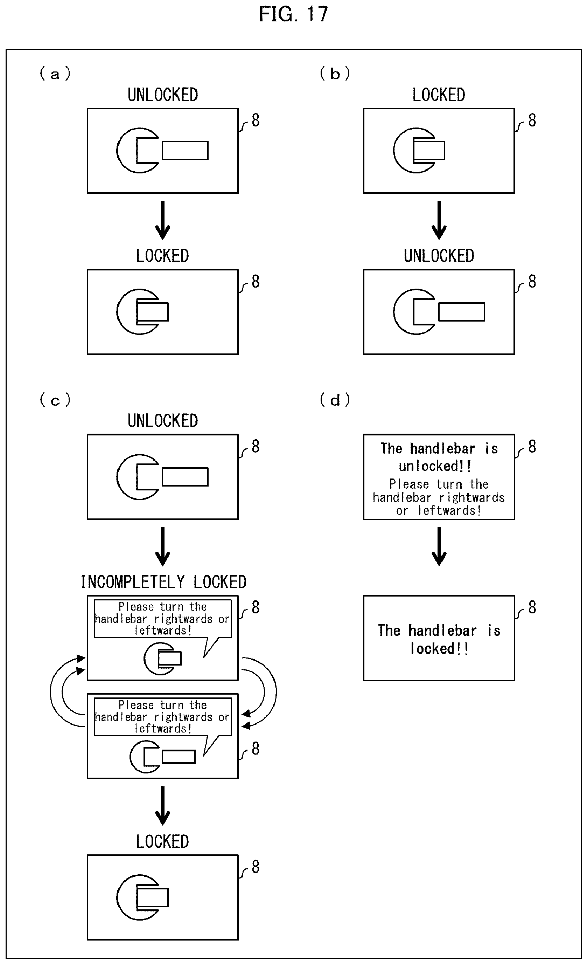

Fig. 17 shows examples of the operation state of the handlebar locking device 20 displayed by the user interface 8. (a) of Fig. 17 shows a case where a lock instruction is inputted during an unlock state, so that locking properly completed. (b) of Fig. 17 shows a case where an unlock instruction is supplied during a lock state, so that unlocking is properly completed. (c) of Fig. 17 shows a case where a lock instruction is inputted during an unlock state, so that the state is transitioned to an incomplete lock state and then locking is properly completed. (d) of Fig. 17 shows a case where the handlebar 5 in a lock state is turned by a strong force, so that a state is temporarily transitioned to an incomplete lock state and is then back to a proper lock state.

In (a) through (c) of Fig. 17, a lock state is shown by engaging a recessed keyhole shape and a bar-like key shape with each other, and an unlock state is shown by disengaging the shapes from each other. In (c) of Fig. 17 an incomplete lock state is shown by displaying that the engagement and disengagement of the keyhole shape and the bar-like key shape are alternated. In addition, (c) and (d) of Fig. 17 each show that a message for the user, "please turn the handlebar rightwards or leftwards", is displayed. Note that the alternation of the engagement and disengagement of the keyhole shape and the bar-like key shape can be displayed also while the state if being transitioned to the lock state or being transitioned to the unlock state.

### (Variations)

Note that in the present embodiment, the user interface 8 provided on the bicycle 1 is used for (i) transmission of a lock instruction and an unlock instruction and (ii) notification for a user of an operation state of the handlebar locking device 20. However, the present invention is not limited to this configuration. For example, it is alternatively possible that a dedicated application is downloaded to a mobile device, such as a smartphone, of a user of the bicycle 1, so that the mobile device is used for the transmission and the notification. Alternatively, the notification of the operation state of the handlebar locking device 20 can be made not only through displaying but also (i) a sound, a voice, or the like or (ii) a combination of displaying and a sound, a voice, or the like. In a case where the notification is made by a sound, the handlebar locking device 20 can include a sound generating device so that the handlebar locking device 20 itself notifies a user of an operation state of the handlebar locking device 20.

In a case where the handlebar 5 is configured to be lockable, danger is posed by an operation error or the like to cause the handlebar locking device 20 to work while a bicycle is running. Therefore, for the purpose of preventing such a malfunction, a system is set up to determine a running state of a bicycle by, for example, a GPS function, the presence/absence of rotation of the pedals 7, and the status of a kickstand, so that if the bicycle is running, then a lock instruction is ignored. Even in such a case, it is still preferable that a user riding the bicycle can be notified, through a sound, a display, vibration of a mobile device, or the like, that an operation error has occurred.

In the present embodiment, inputting of a lock instruction is used as an example of a signal for locking the handlebar 5, and inputting of an unlock instruction is used as an example of a signal for unlocking the handlebar 5. However, the present invention is not limited to this configuration. For example, it is possible that in a case where several seconds pass while a user of the bicycle 1 is away from the bicycle 1 by several meters or more, the user is prompted to input a signal for locking the handlebar 5. It is alternatively possible that in a case where several seconds passed after a kickstand of the bicycle 1 is put down, the user is prompted to input a signal for locking the handlebar 5. In addition, a user of the bicycle 1 can be prompted to input a signal for unlocking the handlebar 5 in a case where (i) the user entered an area of several meters away from the bicycle 1 and (ii) the kickstand of the bicycle 1 is put up.

Although a two-wheeled bicycle is herein used as an example, the moving body can alternatively be, for example, three-wheeled or four-wheeled. Alternatively, the moving body can be a bicycle which is an electric-assisted bicycle that obtains part of a traveling force from an electric motor that uses a battery as a power source. In such a case, it is possible that an electric power for the handlebar locking device 20 is secured from, instead of a battery or the like, a power supply that drives the electric motor. The moving body is not limited to a bicycle.

### [Software Implementation Example]

The control section 100 and the control section 8a can each be realized by a logic circuit (hardware) provided in an integrated circuit (IC chip) or the like or can be alternatively realized by software as executed by a central processing unit (CPU).

In the latter case, the control section 100 and the control section 8a each include: a CPU which executes instructions of a program that is software realizing the foregoing functions; a read only memory (ROM) or a storage device (each referred to as a "storage medium") in which the program and various kinds of data are stored so as to be readable by a computer (or a CPU); and a random access memory (RAM) in which the program is loaded. An object of the present invention can be achieved by a computer (or a CPU) reading and executing the program stored in the storage medium. Examples of the storage medium encompass "a non-transitory tangible medium" such as a tape, a disk, a card, a semiconductor memory, and a programmable logic circuit. The program can be supplied to the computer via any transmission medium (such as a communications network or a broadcast wave) which allows the program to be transmitted. Note that the present invention can also be achieved in the form of a computer data signal in which the program is embodied via electronic transmission and which is embedded in a carrier wave.

The present invention is not limited to the embodiments, but can be altered by a skilled person in the art within the scope of the claims. The present invention also encompasses, in its technical scope, any embodiment derived by combining technical means disclosed in differing embodiments.

In order to attain the object, a handlebar locking device in accordance with an aspect of the present invention is a handlebar locking device to be mounted in a moving body whose traveling direction is changed by a handlebar, including: a fixed section which is fixed in a first cylinder that is a part of an exterior part of the moving body; a lock pin which is located in the first cylinder and which rotates along with the handlebar; and a lock pin drive mechanism which is located in the first cylinder and which controls the lock pin to move back and forth along an axis of the first cylinder, the fixed section having an engagement groove with which a tip part of the lock pin is to be engaged, and the lock pin drive mechanism being configured to (i) move, in a case where the handlebar is to be locked, the lock pin so that the tip part is engaged with the engagement groove and (ii) move, in a case where the handlebar is to be unlocked, the lock pin so that the tip part moves away from the engagement groove.

According to the configuration, the lock pin rotates along with the handlebar, and the fixed section is fixed in the first cylinder that is a part of the exterior part of the moving body. The fixed section has an end surface located at an axially end part of the fixed section, and an engagement groove to be engaged with the tip part of the lock pin is formed on the end surface. In a case where the lock pin drive mechanism controls the lock pin to move so that the tip part is engaged with the engagement groove of the fixed section, rotation of the handlebar is restricted. This locks the handlebar. In a case where the handlebar is to be unlocked, the lock pin drive mechanism controls the lock pin to move so that the tip part is removed from the engagement groove. This releases the restriction of the handlebar, and therefore allows the handlebar to be rotated.

According to the configuration, the lock pin, the lock pin drive mechanism, and the fixed section are contained in the exterior part of the moving body, and are therefore not viewable from outside of the moving body. This makes it difficult to unlock the handlebar by a forcible method such as breaking the handlebar locking device. In addition, in a case where, while the handlebar is locked, the handlebar is turned to such an extent that it is difficult for moving body to travel straight, the handlebar locking device can be used as a lock for preventing theft.

In such a case, the handlebar locking device can be configured so that: the tip part of the lock pin protrudes out from a hole of a second cylinder which rotates along with the handlebar; and the lock pin drive mechanism is located in the second cylinder.

The handlebar locking device in accordance with an aspect of the present invention can be further configured so that: the lock pin drive mechanism includes a moving part, a drive section which controls the moving part to move between a first position and a second position which is located further away from the fixed section than is the first position, and a pressure-applying section which applies, to the lock pin, a pressure toward the fixed section; in a case where the moving part is located at the first position, the pressure of the pressure-applying section can cause the tip part to be engaged with the engagement groove; and in a case where the moving part is located at the second position, the pressure of the pressure-applying section cannot cause the tip part to be engaged with the engagement groove.

According to the configuration, (i) the tip part of the lock pin is to be engaged with the engagement groove by a pressure of the pressure-applying section and (ii) whether or not the tip part can be engaged with the engagement groove can be switched depending on the position of the moving part. Therefore, even in a case where the tip part of the lock pin is not aligned with the engagement groove, a load applied to the drive section can be absorbed with, for example, the compression of the pressure-applying section. This allows the handlebar locking device to be configured so as to hardly break.

In such a case, the handlebar locking device is preferably further configured so that: the engagement groove includes a plurality of engagement grooves; and the plurality of engagement grooves each have a curved shape.

According to the configuration, in a case where the handlebar in a lock state is turned by a strong force, each of the tip parts of the lock pins is pressured to move along the curved shape of a corresponding one of the engagement grooves. In so doing, the pressure-applying section becomes compressed. This allows each of the tip parts to move, so that each of the tip parts goes over the corresponding engagement groove, so as to move to a part of the end surface located between the engagement grooves. Although the handlebar becomes temporarily unlocked, the handlebar becomes locked again because each of the tip parts immediately enters an adjacent engagement groove. This retains the lock state while also preventing, by releasing the strong force applied to the handlebar, the handlebar locking device from breaking.

The handlebar locking device in accordance with an aspect of the present invention is preferably further configured so that the lock pin drive mechanism electrically controls the lock pin to move.

A complex design is necessary in order to employ only a mechanical structure in which the lock pin, the lock pin drive mechanism, and the fixed section are contained and provided in the exterior part of the moving body so as to be not viewable from outside of the moving body. However, with the configuration in which the lock pin is electrically controlled to move, it is possible to easily achieve a handlebar locking device which is not viewable from outside of the moving body in accordance with an embodiment of the present invention.

The handlebar locking device in accordance with an aspect of the present invention can be configured so as to further include: a lock status identifying section which identifies, according to a position of the lock pin, a lock status indicative of locking of the handlebar by the lock pin; and a notification processing section which outputs the lock status of the handlebar thus identified by the lock status identifying section.

According to the configuration, the lock status identifying section identifies the lock status indicative of locking of the handlebar by the lock pin. Then, the notification processing section outputs the lock status thus identified. As described above, according to the handlebar locking device in accordance with an embodiment of the present invention, it is impossible to visually recognize, from outside of the moving body, whether or not the handlebar is locked. Thus, checking a lock status requires an operation such as actually moving the handlebar. Therefore, the lock status is thus outputted. This makes it possible to check the lock status without carrying out an operation such as actually moving the handlebar.

Alternatively, the notification processing section can be configured so as to transmit out information so as to communicate a lock status via an external device. Alternatively, the notification processing section can include a sound generator or the like in the handlebar locking device so as to generate a sound in the handlebar locking device in order to output information.

The handlebar locking device in accordance with an aspect of the present invention can be configured so as to further include: a lock status identifying section which identifies, according to a position of the lock pin, a lock status indicative of locking of the handlebar by the lock pin; and a notification processing section which outputs the lock status of the handlebar thus identified by the lock status identifying section, the lock status identifying section including a moving part position identifying section which identifies a position of the moving part and a lock pin position identifying section which identifies the position of the lock pin, and the lock status identifying section being configured to detect an incomplete lock state according to results of the identifying by the moving part position identifying section and of the identifying by the lock pin position identifying section, the incomplete lock state being detected in a case where (i) the moving part is located at the first position and (ii) the lock pin is not reaching a position at which the tip part is to be engaged with the engagement groove.

With the configuration, in a case where the lock pin drive mechanism includes the moving part and the drive section as described earlier, it is possible to easily detect that (i) the handlebar is incompletely locked and (ii) the handlebar is incompletely unlocked.

The scope of the present invention also encompasses a moving body which includes the handlebar locking device in accordance with an aspect of the present invention.

### Reference Signs List

1 Bicycle (moving body)
2 Frame
5 Handlebar
8 User interface
8a Control section
9 Front fork
11 Steering column (second cylinder)
11a Guiding long hole (hole)
12 Head tube (first cylinder)
20 Handlebar locking device
30 Lock unit
31 Lock pin
31a Tip part
32 Case
32a Guiding long hole
32b Guiding long hole
36 Lifting/ lowering pin
40 Lock pin drive mechanism
41 Motor
43 Coupling
44 Screw shaft
46 Compression spring (pressure-applying section)
47 Lifting/ lowering guide
48 Lock pin-specific detection piece
49 Nut (moving part)
50 Driving-specific detection piece
60 Control substrate section
70 Fixed bracket (fixed section)
71 Engagement groove
100 Control section (lock status identifying section, notification processing section)
101 Communication section (notification processing section)
S1 Upper driving position sensor (moving part position identifying section)
S2 Lower driving position sensor (moving part position identifying section)
S3 Lock pin position sensor (lock pin position identifying section)

## Claims

1. A handlebar locking device to be mounted in a moving body whose traveling direction is changed by a handlebar, comprising:
a fixed section which is fixed in a first cylinder that is a part of an exterior part of the moving body;
a lock pin which is located in the first cylinder and which rotates along with the handlebar; and
a lock pin drive mechanism which is located in the first cylinder and which controls the lock pin to move back and forth along an axis of the first cylinder,
the fixed section having an engagement groove with which a tip part of the lock pin is to be engaged, and
the lock pin drive mechanism being configured to (i) move, in a case where the handlebar is to be locked, the lock pin so that the tip part is engaged with the engagement groove and (ii) move, in a case where the handlebar is to be unlocked, the lock pin so that the tip part moves away from the engagement groove.

2. The handlebar locking device as set forth in claim 1, wherein:
the tip part of the lock pin protrudes out from a hole of a second cylinder which rotates along with the handlebar; and
the lock pin drive mechanism is located in the second cylinder.

3. The handlebar locking device as set forth in claim 1 or 2, wherein:
the lock pin drive mechanism includes
a moving part,
a drive section which controls the moving part to move between a first position and a second position which is located further away from the fixed section than is the first position, and
a pressure-applying section which applies, to the lock pin, a pressure toward the fixed section;
in a case where the moving part is located at the first position, the pressure of the pressure-applying section can cause the tip part to be engaged with the engagement groove; and
in a case where the moving part is located at the second position, the pressure of the pressure-applying section cannot cause the tip part to be engaged with the engagement groove.

4. The handlebar locking device as set forth in claim 3, wherein:
the engagement groove includes a plurality of engagement grooves; and
the plurality of engagement grooves each have a curved shape.

5. The handlebar locking device as set forth in any one of claims 1 through 4, wherein
the lock pin drive mechanism electrically controls the lock pin to move.

6. The handlebar locking device as set forth in any one of claims 1 through 5, further comprising:
a lock status identifying section which identifies, according to a position of the lock pin, a lock status indicative of locking of the handlebar by the lock pin; and
a notification processing section which outputs the lock status of the handlebar thus identified by the lock status identifying section.

7. The handlebar locking device as set forth in claim 3 or 4, further comprising:
a lock status identifying section which identifies, according to a position of the lock pin, a lock status indicative of locking of the handlebar by the lock pin; and
a notification processing section which outputs the lock status of the handlebar thus identified by the lock status identifying section,
the lock status identifying section including
a moving part position identifying section which identifies a position of the moving part and
a lock pin position identifying section which identifies the position of the lock pin, and
the lock status identifying section being configured to detect an incomplete lock state according to results of the identifying by the moving part position identifying section and of the identifying by the lock pin position identifying section, the incomplete lock state being detected in a case where (i) the moving part is located at the first position and (ii) the lock pin is not reaching a position at which the tip part is to be engaged with the engagement groove.

8. A moving body comprising:
a handlebar locking device recited in any one of claims 1 through 7.
